# EUROPEAN PATENT APPLICATION

(11) **EP 4 105 178 A1**
(43) Date of publication of application: **21.12.2022**
(21) Application number: 21305825.8
(22) Date of filing: 16.06.2021
(51) Int. Cl.: C01F 11/46

(54) **A PROCESS FOR THE CONTINUOUS PREPARATION OF ALPHA-CALCIUM SULPHATE HEMIHYDRATE AND AN APPARATUS**

(71) Applicant: SAINT-GOBAIN PLACO, 92400 Courbevoie (FR)
(72) Inventor: COLOMBO, Joel, 84306 Cavaillon (FR); MAGAUD, Lionel, 84306 Cavaillon (FR); HIS, Christian, 84306 Cavaillon (FR); FIGUEIREDO DORNELES, Matheus, 84306 Cavaillon (FR)
(74) Representative: Murgitroyd & Company

(57) **Abstract**

There is described a process for the continuous production of alpha-calcium sulphate hemihydrate, the process comprising the steps of: mixing particulate gypsum, a habit modifier and water to form a gypsum slurry. The process further comprises calcining the gypsum slurry to provide an alpha-calcium sulphate hemihydrate slurry and filtering the alpha-calcium sulphate hemihydrate slurry to separate at least one fluid stream from the slurry, measuring a first control parameter of the at least one fluid stream or the alpha-calcium sulphate hemihydrate slurry; and combining the at least one fluid stream with further gypsum, further water and further habit modifier to form a further gypsum slurry wherein the process further comprises varying the amount of further habit modifier depending on a measured value of the first control parameter. An apparatus for performing the described process is also provided.

## Description

### FIELD OF THE INVENTION

The present invention relates to a process for the continuous preparation of alpha-calcium sulphate hemihydrate. The present invention further relates to an apparatus for providing the process.

### BACKGROUND TO THE INVENTION

Gypsum occurs naturally as a raw material in the form of calcium sulphate dihydrate (CaSO₄ 2(H₂O)). Gypsum containing products, such as plasterboard, are prepared by forming a mixture of calcined or dehydrated gypsum, namely calcium sulphate hemihydrate (CaSO₄ 0.5(H₂O)), with water, to form a settable slurry that is then cast into a pre-determined shape. The calcium sulphate hemihydrate reacts with the water and becomes re-hydrated to the dihydrate crystal, which is then cured or dried to the solid state.

The calcium sulphate hemihydrate can be categorised into two basic forms, alpha-calcium sulphate hemihydrate and beta-calcium sulphate hemihydrate. Beta-calcium sulphate hemihydrate is typically formed by heating gypsum in air at ambient humidity or raised humidity and at ambient (i.e. atmospheric) pressure. On the other hand, alpha-calcium sulphate hemihydrate is produced from gypsum in steam or water under conditions of elevated temperature and pressure. Whilst both alpha-calcium sulphate hemihydrate and beta-calcium sulphate hemihydrate can be used to create gypsum products, gypsum products made with alpha-hemihydrate tend to be harder, with greater strength and density.

In commercial industrial environments where gypsum products are continuously produced, it is often desirable or necessary to continuously produce alpha-calcium sulphate hemihydrate. The continuous production of alpha-calcium sulphate hemihydrate can be more difficult than a batch production process, as there is a need to control the parameters of the production process continually and in real time. A continuous wet calcination process for the production of alpha-calcium sulphate hemihydrate typically involves particles of gypsum being combined with water, and then this gypsum slurry being calcined at conditions of raised temperature and pressure to produce an alpha-calcium sulphate hemihydrate slurry. The particles of alpha-calcium sulphate hemihydrate are then separated from the majority of the water in the slurry in a filtration or separation process to produce a cake of alpha-calcium sulphate hemihydrate and a separate water stream.

Alpha-calcium sulphate hemihydrate manufactured in solution via the "wet alpha" process is a monocrystal with different crystal planes. The aspect ratio (length to width) of the crystals of alpha-calcium sulphate hemihydrate is influenced by the elements, compounds and substances present in the gypsum slurry during the calcination process. These elements, substances and compounds, known as habit modifiers, can change the aspect ratio of the particles of alpha-calcium sulphate hemihydrate by preferentially adsorbing on to specific faces of the crystals during formation, substituting themselves into the crystal lattice or by reacting with calcium and/ or sulphate ions in the solution to decrease the concentration of these ions. Habit modifiers can be present due to impurities within the gypsum used in the calcination process (e.g. magnesium from dolomite) or be incorporated into the gypsum slurry deliberately (e.g. succinic acid).

In commercial processes, for the production of alpha-calcium sulphate hemihydrate, habit modifiers are used to ensure the particles produced have the desired aspect ratio. Generally, this desired aspect ratio is a width to length ratio of around 1, preferably in the range of 0.8:1 to 1.2:1. In today's commercial processes, the most commonly used habit modifier is succinic acid. The aspect ratio of the particles of alpha-calcium sulphate hemihydrate produced during continuous calcination is sensitive to the concentration of succinic acid used, with an optimum succinic acid level often understood to be around 0.86 g per litre of slurry, or 1.2 g per kg of gypsum where the water:gypsum ratio is 1:1. Generally, it is believed that around one third of this amount is consumed during the calcination process. Hence, a significant proportion of the succinic acid introduced into the calcination process remains in the alpha-calcium sulphate hemihydrate slurry when the calcination process is complete.

Succinic acid, and other habit modifiers, are often relatively expensive consumables within the alpha-calcination process, so there is a drive to reduce the wastage of these materials. Whilst it is very challenging to recover any habit modifier that is retained within the alpha-calcium sulphate hemihydrate cake, bound to particles or otherwise, habit modifiers can also be found within the water stream separated from the alpha-calcium sulphate hemihydrate during the filtration process. As such, these habit modifiers can be recovered and reused by combining this water stream with fresh water and gypsum particles at the start of the calcination process.

However, such methods of recovering habit modifiers have their drawbacks. As previously described, the aspect ratio of the alpha-calcium sulphate hemihydrate particles produced in the calcination process can be sensitive to the concentration of succinic acid or other habit modifiers. Therefore, small variations in the concentration of habit modifiers within the gypsum slurry can have a large influence on the quality of the particle of alpha-calcium sulphate hemihydrate produced. Small differences in the amount of habit modifier recovered within the water stream are often seen in continuous processes due to small changes in the quality of the gypsum inputted. Therefore, there is a need to improve the consistency of the alpha-calcium sulphate produced by systems of the prior art.

### SUMMARY OF THE INVENTION

According to a first aspect of the present invention there is provided a process for the continuous production of alpha-calcium sulphate hemihydrate, the process comprising the steps of: mixing particulate gypsum, a habit modifier and water to form a gypsum slurry; calcining the gypsum slurry to provide an alpha-calcium sulphate hemihydrate slurry; filtering the alpha-calcium sulphate hemihydrate slurry to separate at least one fluid stream from the slurry; measuring a first control parameter of the at least one fluid stream or the alpha-calcium sulphate hemihydrate slurry; and combining the at least one fluid stream with further gypsum, further water and further habit modifier to form a further gypsum slurry, wherein the process further comprises varying the amount of further habit modifier depending on a measured value of the first control parameter.

In this way, there is provided a process wherein a parameter of the at least one fluid stream or the alpha-calcium sulphate hemihydrate slurry is measured to allow the quality and consistency of the output of the process to be monitored over time. The process comprises varying the amount of further habit modifier depending on a measured value of the first control parameter. In this way, the quality and properties of a future alpha-calcium sulphate hemihydrate slurry produced by the process may be varied in response to the properties of the current alpha-calcium sulphate hemihydrate slurry produced by the process. In this way, the properties and/or quality of the alpha-calcium sulphate hemihydrate can be tuned and optimised during the continuous production process.

Preferably, the process comprises measuring a first control parameter of both the at least one fluid stream and the alpha-calcium sulphate hemihydrate slurry. In this way, the process may be monitored more closely, potentially allowing a greater level of control and/or more accurate control.

Preferably, the process comprises comparing the measured value of the first control parameter to a set-point value. Preferably, the set-point value is predetermined. More preferably, the amount of further habit modifier is increased when the measured value is lower than the set-point value. Alternatively, the amount of further habit modifier is decreased when the measured value is lower than the set-point value.

Preferably the step of measuring the first control parameter comprises continuously measuring said first control parameter. Where the first control parameter is continuously measured, this may provide the advantage of allowing the process to be continuously controlled. Alternatively, the step of measuring the first control parameter comprises periodically measuring said first control parameter. Preferably, the period between measurements is 1 hour or less, more preferably 30 minutes or less, still more preferably 10 minutes or less and most preferably 1 minute or less.

Preferably, the first control parameter is the pH of the at least one fluid stream or the alpha-calcium sulphate hemihydrate slurry. Where the habit modifier comprises an acid, measuring the pH can provide a quantification of the amount of habit modifier that remains in the at least on fluid stream or the alpha-calcium sulphate hemihydrate slurry after the calcination process.

Alternatively, the first control parameter is the volumetric flow rate of the at least one fluid stream or the alpha-calcium sulphate hemihydrate slurry. The volumetric flow rate can provide a quantification of the amount of water entrapped between the particles of alpha-calcium sulphate hemihydrate within the slurry. The amount of water bound to the particles relates to the shape of the particles. As the shape of the alpha-calcium sulphate hemihydrate particles depends on the concentration of habit modifier in the slurry, the volumetric flow rate can be used to infer the amount of habit modifier present in the slurry during the calcination process.

Preferably, the process comprises the further step of measuring a second control parameter of the at least one fluid stream or the alpha-calcium sulphate hemihydrate slurry. More preferably, the step of measuring the second control parameter comprises periodically measuring said second control parameter. Preferably, the period between measurements of the second control parameter is greater than the period between measurements of the first control parameter, for example, the period between measurements of the second control parameter is one hour or more, more preferably 6 hours of more, yet more preferably 12 hours or more and most preferably on day or more.

Preferably, the step of measuring the second control parameter comprises enzymatic dosing. More preferably, the enzymatic dosing comprises dosing succinyl- CoA synthetase. Preferably, the enzymatic dosing comprises dosing pyruvate kinase. Preferably, the enzymatic dosing comprises dosing L-lactate dehydrogenase. Most preferably, the enzymatic dosing comprises dosing succinyl-CoA synthetase, pyruvate kinase and L-lactate dehydrogenase in sequence.

Preferably, the process comprises analysing the product of the enzymatic dosing with ultraviolet light. More preferably, the ultraviolet light has a wavelength of 340 nm. Preferably, the process comprises detecting presence and or amount of or nicotinamide adenine dinucleotide (NAD+) in the product of the enzymatic dosing.

Preferably, the step of measuring the second control parameter comprises an assay whereby succinic acid is converted into nicotinamide adenine dinucleotide (NAD+). Such an assay may allow the quantification of succinic acid within the at least one fluid stream and/or the alpha-calcium sulphate hemihydrate slurry as such an assay converts succinic acid to NAD+ at a 1:1 ratio. Preferably, the second control parameter is the concentration of succinic acid in the at least one fluid stream or the concentration of succinic acid in the alpha-calcium sulphate hemihydrate slurry.

Preferably, the step of measuring the second control parameter comprises ionic chromatography. More preferably, the step of measuring the second control parameter comprises ionic chromatography using an inductively coupled plasma detector. More preferably, the step of measuring the second control parameter is conducted using an in-line ionic chromatography apparatus,

Preferably, the step of measuring the second control parameter comprises near-infra red spectroscopy. Preferably, the method further comprises measuring a near-infra red spectrum in transmission. Alternatively, the method further comprises measuring a near-infra red spectrum in reflection. Preferably, the step of measuring includes a Fourier transform.

Preferably, the step of measuring the second control parameter comprises combining the at least one fluid stream or the alpha-calcium sulphate hemihydrate slurry with a source of copper and/or copper ions. Preferably, the method further includes measuring the presence and/or amount of one or more copper complexes within the at least one fluid stream or the alpha-calcium sulphate hemihydrate slurry. More preferably, the measured copper complex comprises Copper (II) and succinate. Most preferably, the complex consists of a dimer in which each Copper atom is linked through two carboxylate-oxygen atoms from a tetradentate succinate ligand and four nitrogen atoms from two chelating 2,20-bipyridyl group where the succinate ligand bridges between the two Cu atoms.

Preferably, the process comprises calibrating a measured value of the first control parameter with a measured value of the second control parameter. In this way, any drift or error in the measured value of the first control parameter over time can be detected and calibrated against.

Preferably, the process comprises measuring the first control parameter more frequently than measuring the second control parameter.

Preferably, the step of measuring the second control parameter comprises taking a sample of the at least one fluid stream or the alpha-calcium sulphate hemihydrate slurry and measuring the second control parameter offline. In this way, a wider variety of analytical techniques can be performed to measure the second control parameter. Additionally, it may be possible to determine the second control parameter more accurately with an offline measurement. Here, offline should be interpreted to mean a sample is removed from the apparatus such that the measurement of the second control parameter occurs when the sample is separate from the fluid streams and slurries within the apparatus.

Preferably, the measurement of the second control parameter is slower than the measurement of the first control parameter. In this way, measurement of the first control parameter may be regular and or constant, whilst the measurement of the second control parameter can be more periodic.

Preferably, the measurement of the second control parameter is more accurate than the measurement of the first control parameter. Here, more accurate should be interpreted to mean that the measurement has a smaller margin of experimental error.

Preferably, the habit modifier comprises succinic acid.

Preferably, the alpha-calcium sulphate hemihydrate slurry comprises particles having a length to width ratio of between 0.8:1 and 1.2:1 inclusive. More preferably, the alpha-calcium sulphate hemihydrate slurry comprises particles having a length to width ratio of around 1:1. Such a length to width ratio may be preferred to ensure good slurry fluidity throughout the process.

According to a second aspect of the present invention, there is provided an apparatus for providing the previously described process, the apparatus comprising: a mixing zone for mixing habit modifier, water and gypsum particles; a calciner comprising or located downstream of and in fluid communication with the mixing zone; a filter located downstream of and in fluid communication with the calciner; and a fluid pathway for carrying at least one fluid stream from the filter and introducing the at least one fluid stream into the mixing zone; and at least one measurement device configured to measure a first control parameter of the at least one fluid stream or the alpha-calcium sulphate hemihydrate slurry, wherein the apparatus further comprises control means for varying the amount of habit modifier added to the mixing zone depending on the measured value of the first control parameter..

In this way, an apparatus capable of providing the hereinbefore described advantageous process is provided.

Preferably, the mixing zone is located in a mixing vessel.

Preferably, the apparatus comprises a second measurement device configured to measure a second control parameter of the at least one fluid stream or the alpha-calcium sulphate hemihydrate slurry.

### DETAILED DESCRIPTION

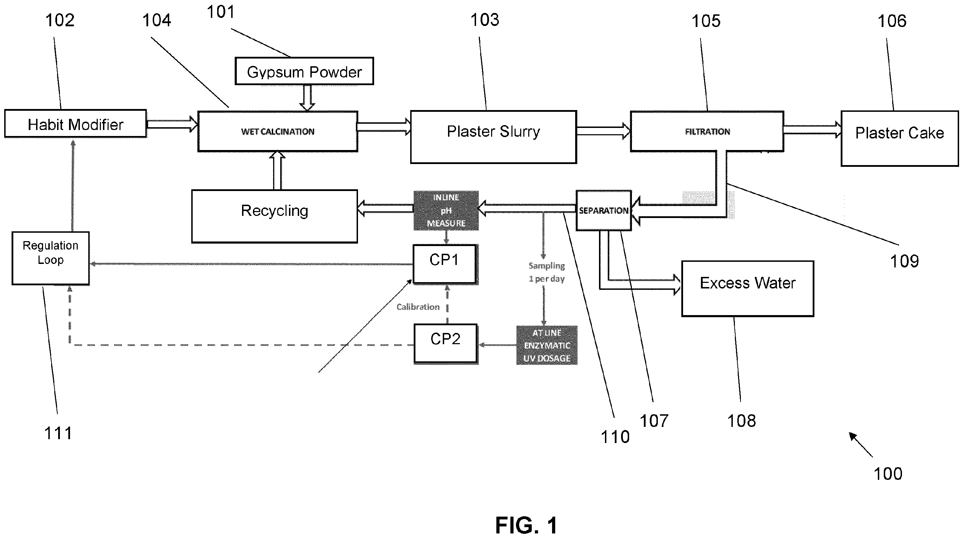

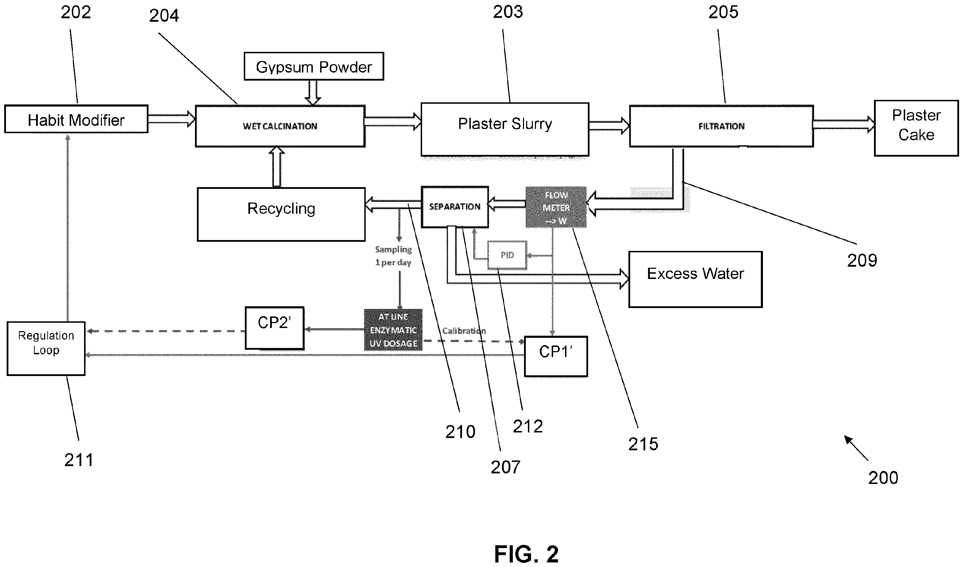

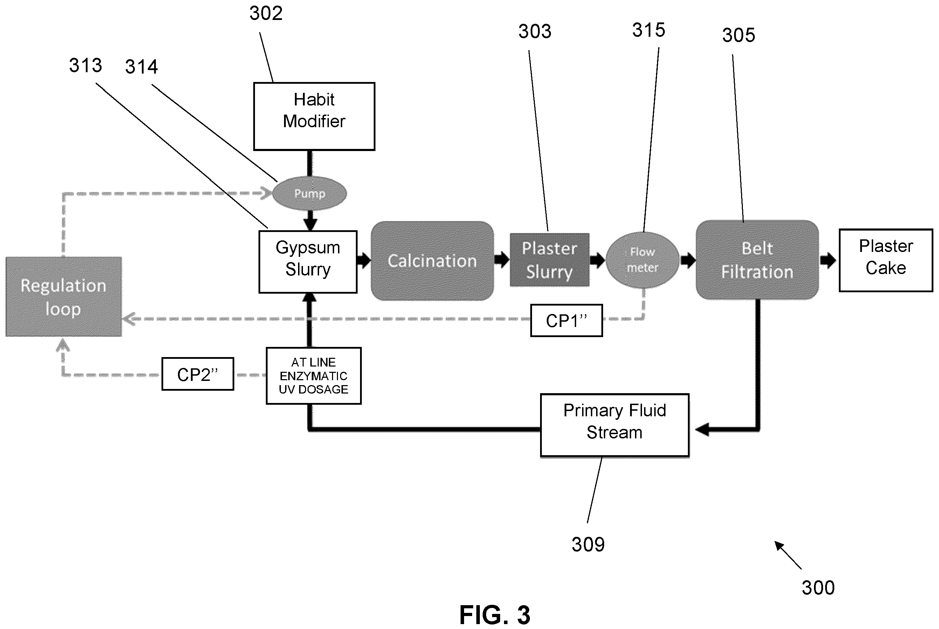

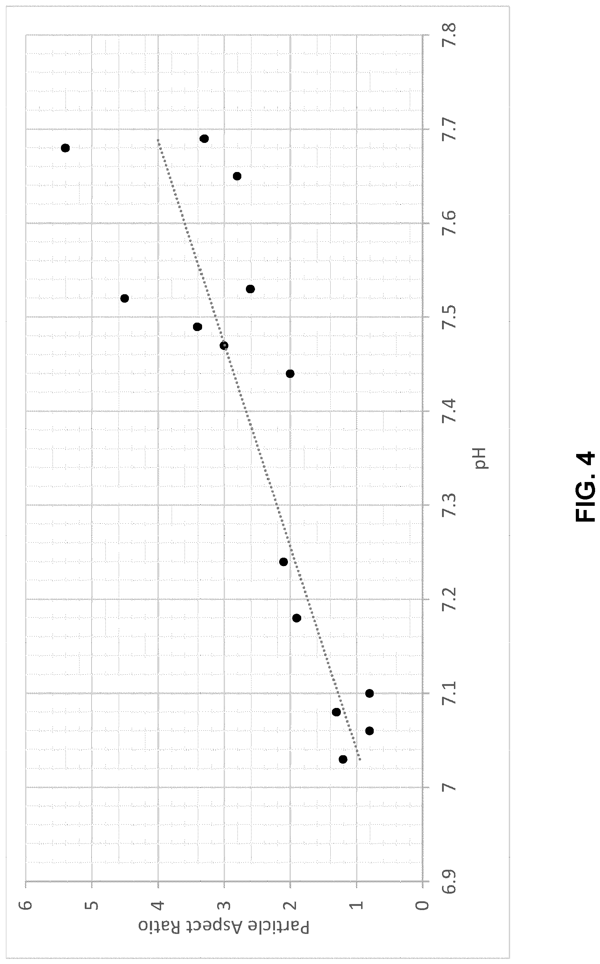

Embodiments of the present invention will now be described by way of example only and with reference to Figures 1 to 3.
With reference to Figure 1, there is illustrated a diagram of the process for the continuous production of alpha-calcium sulphate hemihydrate;
with reference to Figure 2, there is illustrated a diagram of a second embodiment of the process of Figure 1;
with reference to Figure 3, there is illustrated a diagram of a third embodiment of the process of Figure 1;
With reference to Figure 4, there is illustrated a graph with data obtained from batch calcination experiments plotting the pH of the filtrate against the aspect ratio of the dried gypsum particles obtained from the corresponding slurry.

The process 100 illustrated in Figure 1 comprises mixing particulate gypsum 101; a habit modifier 102 (here succinic acid); and water to form a gypsum slurry. The gypsum slurry is calcined to provide an alpha-calcium sulphate hemihydrate slurry 103 in a wet calcination step 104. To achieve low aspect ratio crystals and to maintain a low viscosity during calcination 104, the gypsum slurry comprises 0.86 g/l of succinic acid 102. After calcination 104, the alpha-calcium sulphate hemihydrate slurry 103 comprises particles having a length to width ratio of around 1:1, ensuring good slurry fluidity throughout the process 100.

There follows a filtration step 105, wherein the alpha-calcium sulphate hemihydrate slurry 103 is filtered to separate a primary fluid stream 109 from the slurry 103. In this way, excess fluid is removed from the slurry 103 such that a plaster cake 106 can be formed. In this embodiment, the filtration step 105 comprises Buchner filtration.

To improve the efficiency of the process 100 and to reduce cost, thermal demand and resource demand, water comprising the habit modifier 102 is recycled and reinjected into the gypsum slurry. As such, after the filtration step 105, the primary fluid stream 109 is separated, in a separation step 107, into a secondary fluid stream 110 comprising fluid for reinjection into the process 100 and excess water 108 for removal. The excess water 108 is removed for re-use or disposal. For example, the excess water 108 not reinjected into the gypsum slurry may be re-used within the process 100, such as in the boardline to warm up the slurry. The secondary fluid stream 110 is combined with further gypsum 101, further water and further habit modifier 102 to form a further gypsum slurry.

The primary fluid stream 109 flows substantially continuously during the process 100, with the primary fluid stream 109 being pumped into the mixing tank after filtration 105.

However, to ensure the concentration of habit modifier 102 in the further gypsum slurry is kept constant and at an optimal level, the concentration of further habit modifier 102 mixed with further particulate gypsum 101 and further water must be monitored and regulated. As such, the process 100 comprises a regulation loop 111 for regulating the concentration of habit modifier 102 in the gypsum slurry in view of the concentration of succinic acid within the secondary fluid stream 110 in the further habit modifier 102. In this embodiment, the concentration of succinic acid within the secondary fluid stream 110 is around 0.7 g/l and the concentration of succinic acid in the habit modifier 102 is around 20 g/l. The regulation loop 111 comprises a proportional integral derivative (PID) controller.

The process 100 comprises measuring a first control parameter CP1 of the secondary fluid stream 110. Succinic acid is consumed both during calcination 104 and filtration 105, as well as through dilution mechanisms. For example, the concentration of succinic acid 102 tends to decrease after calcination 104 as bonded-water is released and succinate remains adsorbed to some extent on the surface of the α-plaster crystals. As such, the filtrate pH is significantly influenced by the concentration of habit modifier 102, namely the succinic acid. Thus, measuring the pH value of the secondary fluid stream 110 as the first control parameter CP1 provides an indication of the concentration of habit modifier 102 within the secondary fluid stream 110.

The step of measuring the first control parameter CP1, namely the pH of the secondary fluid stream 110, comprises measuring the first control parameter CP1 every minute. In this way, the first control parameter CP1 is measured regularly. The first control parameter CP1 is compared to a predetermined set-point value. In response to the comparison against the set-point value, the regulation loop 111 regulates the concentration of habit modifier 102 in the gypsum slurry by varying the amount of further habit modifier 102 added to the gypsum slurry. The amount of further habit modifier 102 is increased when the measured value is lower than the set-point value and the amount of further habit modifier 102 is decreased when the measured value is higher than the set-point value.

The process 100 comprises the further step of periodically measuring a second control parameter CP2 of the secondary fluid stream 110 offline and calibrating the measured value of the first control parameter CP1 with a measured value of the second control parameter CP2. In this way, any drift or error in the measured value of the first control parameter over time can be detected and eliminated by calibration. In this embodiment, the step of measuring the second control parameter CP2 comprises enzymatic dosing. The period between measurements of the second control parameter CP2 is one day. As such, enzymatic dosing can be used as a periodic control to detect process deviations.

The enzymatic dosing is carried out as follows. In the presence of succinyl-CoA synthetase (SCS), the succinate anion present in the fluid stream (due to the dissociated succinic acid) is converted into succinyl-CoA by the adenosine triphosphate (ATP), leading to the formation of adenosine diphosphate (ADP) and inorganic phosphate, according to the following reaction path:

Succinate + ATP ^{(*SCS*)} → succinyl-CoA + ADP + Pi

Then, in presence of pyruvate kinase (PK), the ADP reacts with the phosphoenolpyruvate (PEP) to form pyruvate and ATP:

ADP + PEP ^{(*PK*)}→ ATP + pyruvate

Finally, the pyruvate is reduced by the nicotinamide-adenine dinucleotide (NADH), in presence of L-lactate deshydrogenase (L-LDH), into L-lactate and NAD⁺:

Pyruvate + NADH ^{(*L*-*LDH*)}→ L-lactate + NAD⁺

The amount of NAD⁺ formed during the last reaction step is stoichiometrically related (1:1) to the succinate content. As a result, the initial succinate content can be derived from the NADH consumption measured by UV absorbance at 340 nm. Finally, the succinic acid concentration (in g/l) can be expressed as:
C_{AS} = 0.5136 ΔA_{NADH}

Where ΔA_{NADH} is the variation in absorbance (u.A) of NADH during the enzymatic reaction. The above enzymatic dosing regime can be used as part of any embodiment of the invention.

The measurement of the second control parameter CP2 is slower than the measurement of the first control parameter CP1, and measuring the first control parameter CP1 occurs more frequently the measurement of the second control parameter CP2. In this way, measurement of the first control parameter CP1 is regular, whilst the measurement of the second control parameter CP2 is more periodic, allowing for offline and more accurate measurement.

In the following description, similar numerals will be used for similar parts of the second embodiment of the present invention outlined in Figure 2. There is illustrated a process 200 for the continuous production of alpha-calcium sulphate hemihydrate, wherein the habit modifier 202 comprises succinic acid. The process 200 of Figure 2 is similar to the process 100 of Figure 1 with the following differences.

During the filtration step 205, an alpha-calcium sulphate hemihydrate slurry 203 is filtered to separate a primary fluid stream 209 from the slurry 203. In this embodiment, prior to the separation step 207, the process 200 comprises measuring a first control parameter CP1' of the primary fluid stream 209 using a flow meter 215.

The first control parameter CP1' is the volumetric flow rate of the primary fluid stream. The volumetric flow rate provides a quantification of the amount of water bound to the particles of alpha-calcium sulphate hemihydrate within the gypsum slurry. As the shape of the alpha-calcium sulphate hemihydrate particles is dependent on the concentration of habit modifier 202, the volumetric flow rate can be used to infer the amount of habit modifier 202 present in the slurry during the calcination process 204.

There follows a separation step 207, wherein the primary fluid stream 209 is separated into a secondary fluid stream 210 and excess water for removal. The measurement of the second control parameter CP2' occurs after the separation step 207, with the second control parameter CP2' of the secondary fluid stream 210 being periodically measured. The measured value of the first control parameter CP1' is calibrated with a measured value of the second control parameter CP2' and a regulation loop 211 regulates the concentration of further habit modifier 202 in the further gypsum slurry. The step of measuring the second control parameter CP2' comprises enzymatic dosing as described in relation to Figure 1 and occurs offline. The process 200 further comprises a PID controller 212 for controlling the separation step 207.

With reference to Figure 3, there is illustrated a third embodiment of the process 300 of the present invention, similar to the process 100 of Figure 1. Herein, a habit modifier 302, also succinic acid, is pumped into a gypsum slurry 313 via a pump 314. The process 300 comprises measuring a first control parameter CP1" of the alpha-calcium sulphate hemihydrate slurry 303, rather than a control parameter of at least one fluid stream. The first control parameter CP1" is the volumetric flow rate of the alpha-calcium sulphate hemihydrate slurry 303 and is measured using a first flow meter 315.

The process 300 also comprises a filtration step 305 wherein the alpha-calcium sulphate hemihydrate slurry 303 is filtered to separate a primary fluid stream 309 from the slurry 103 using belt filtration. The efficiency of the filtration step 305 can be determined by the shape of the plaster crystals, and thus the succinic acid concentration. A reliable filtration efficiency criterion is the relative amount of water removed by the belt filter in the filtration step 305, which is an indicator of the plaster water demand. If the calcination process is well controlled, namely there is a stable water to gypsum ratio and a 100% conversion to alpha-calcium sulphate hemihydrate, and the filtration is stable, the amount of water extracted during the filtration step 305 can be used to regulate the concentration of succinic acid 302, as shown in Figure 3. Regulation of the concentration of succinic acid 302 takes into account the residence time of the calcination process.

The step of measuring the second control parameter CP2" comprises enzymatic dosing as described in relation to Figure 1 and occurs offline. The process 300 further comprises calibrating the measured value of the first control parameter CP1" with a measured value of the second control parameter CP2", as described in relation to Figures 1 and 2.

In some embodiments, a second flow meter is arranged to measure the second control parameter CP2". In such embodiments, the volumetric flow rate of the primary fluid stream 309 is the second control parameter CP2". In this way, both the first control parameter CP1" and second control parameter CP2" are measured online. By calibrating a measured value of the first control parameter CP1" with a measured value of the second control parameter CP2", any error in the measured value from the alpha-calcium sulphate hemihydrate slurry 303 can be detected against the measured value from the primary fluid stream 309.

### Experimental Trials

As part of the development of the present invention, the inventors conducted a series of trials. Alpha-calcium sulphate hemihydrate slurries were produced by batch wet calcination in a reactor using succinic acid as a habit modifier. In these experiments, four different sources of gypsum were used, and in each case the gypsum was calcined for a period of 40 minutes at a temperature of 135 ± 5 °C, a pressure of 300 000 ± 50 000 Pa. and a water to gypsum ratio of 1.

In each case, after calcination, the resulting alpha-calcium sulphate hemihydrate slurry was filtered to recover, as a filtrate, between 69% and 77% of the water introduced into the reactor. After removal of the filtrate using a Buchner funnel with a paper filter and a vacuum pump, the cake of alpha-calcium sulphate hemihydrate was soaked in isopropanol and filtered for a second time with the Buchner apparatus. Finally, the cake was placed into a drying oven at 40°C to eliminate any isopropanol residue. Subsequently, analysis of the alpha-calcium sulphate hemihydrate particles was undertaken with a scanning electron microscope (SEM) to characterise the size and dimensions of the alpha-calcium sulphate hemihydrate particles.

The composition and particle size distribution of the four different sources of gypsum used in the experiments are detailed below in Table 1 and Table 2.

**TABLE 1**

| | **Composition (wt.%)** | | | |
|---|---|---|---|---|
| **Substance** | **Gypsum A** | **Gypsum B** | **Gypsum C** | **Gypsum D** |
| Gypsum | 96.3 | 91.3 | 80.5 | 86.2 |
| Anhydrite | 0.0 | 0.6 | 0 | 0 |
| CaCO₃ | 2.5 | 3.5 | 2.6 | 9.5 |
| MgCO₃ | 0 | 0.7 | 4.1 | 0.4 |
| K₂O | 0 | 0 | 0.6 | 0 |
| SrO | 0 | 0.3 | 0.2 | 1 |
| TiO₂ | 0 | 0 | 0.1 | 0 |
| Clays and silicates | 1.2 | 3.5 | 12.1 | 2.9 |

**TABLE 2**

| **Gypsum** | **D10 (µm)** | **D50 (µm)** | **D90 (µm)** |
|---|---|---|---|
| Gypsum A | 20.0 | 41.5 | 67.0 |
| Gypsum B | 3.4 | 16.0 | 64.0 |
| Gypsum C | 2.5 | 10.5 | 58.9 |
| Gypsum D | 1.8 | 11.4 | 72.0 |

Here the D10, D50 and D90 measures for each gypsum represent values where 10%, 50% and 90% respectively of measured diameters within the gypsum are smaller than the specified value.

In a first experiment, each of Gypsums A to D was calcined and filtered as hereinbefore described. Subsequently, the concentration of succinic acid (measured with an enzymatic kit) and the pH of the filtrate was measured in each case. Four trials were conducted with Gypsums A, B and D, and three trials were conducted with Gypsum C. In the first of the trials with each gypsum, succinic acid was added to the slurry at a concentration of 0.86 g/l. Subsequently, the filtrate obtained from the first trial was added to the slurry during the second trial, this filtration and reintroduction process repeated throughout the trails leading to a successive decrease in the succinic acid concentration in each trial.

The different concentrations of succinic acid in the filtrate were measured using a reference method after calcination. These measurements are presented in Table 3.

**TABLE 3**

| **Gypsum** | **Concentration of Succinic Acid (mg/l)** | **pH** |
|---|---|---|
| Gypsum A | 1027 | 7.08 |
| | 334 | 7.18 |
| | 257 | 7.49 |
| | 77 | 7.68 |
| Gypsum B | 822 | 7.1 |
| | 308 | 7.24 |
| | 103 | 7.53 |
| | 18 | 7.69 |
| Gypsum C | 774 | 7.06 |
| | 368 | 7.44 |
| | 146 | 7.65 |
| | - | - |
| Gypsum D | 1002 | 7.03 |
| | 385 | 7.24 |
| | 146 | 7.47 |
| | 35 | 7.52 |

As can be determined from Table 3, the measured pH depended on the concentration of succinic acid within the filtrate as expected. As such, it can be determined that measuring the concentration of succinic acid within the filtrate can be determined via measuring the pH of the filtrate.

In a further stage of the experiments outlined above, the alpha-calcium sulphate hemihydrate within the slurries produced was retained and analysed with a scanning electron microscope. Here, the aspect ratio (length to width) of the particles of the alpha-calcium sulphate hemihydrate was measured with this data presented in Table 4 below.

**TABLE 4**

| **Gypsum** | **pH** | **Aspect Ratio** |
|---|---|---|
| Gypsum A | 7.08 | 1.3 |
| | 7.18 | 1.9 |
| | 7.49 | 3.4 |
| | 7.68 | 5.4 |
| Gypsum B | 7.1 | 0.8 |
| | 7.24 | 2.1 |
| | 7.53 | 2.6 |
| | 7.69 | 3.3 |
| Gypsum C | 7.06 | 0.8 |
| | 7.44 | 2.0 |
| | 7.65 | 2.8 |
| | - | - |
| Gypsum D | 7.03 | 1.2 |
| | 7.24 | 2.1 |
| | 7.47 | 3.0 |
| | 7.52 | 4.5 |

The above data is additionally presented in Figure 4. As can be seen from Table 4 and Figure 4, there is a clear correlation between the pH of the filtrate and the aspect ratio of the particles of alpha-calcium sulphate hemihydrate. As the pH of the filtrate is directly related to the pH of the slurry during the calcination process, it can therefore be determined that the aspect ratio of the particles of alpha-calcium sulphate hemihydrate correlates with the pH of the slurry during the wet calcination process. As illustrated in Table 3, the pH depends upon the concentration of the succinic acid habit modifier present during the wet calcination process.

Given the above, the concentration of habit modifier during the wet calcination process has a significant impact on the aspect ratio of the particles of alpha-calcium sulphate hemihydrate produced. As such, if filtrate containing a variable content of habit modifier is to be reintroduced into the wet calcination process as described herein it is essential the concentration of habit modifier within that filtrate is monitored. Additionally, the amount of additional habit modifier introduced to the further slurry must be controlled to ensure particles of alpha-calcium sulphate hemihydrate of the desired aspect ratio are obtained.

## Claims

1. A process for the continuous production of alpha-calcium sulphate hemihydrate, the process comprising the steps of:
mixing particulate gypsum, a habit modifier and water to form a gypsum slurry;
calcining said gypsum slurry to provide an alpha-calcium sulphate hemihydrate slurry;
filtering said alpha-calcium sulphate hemihydrate slurry to separate at least one fluid stream from said slurry;
measuring a first control parameter of said at least one fluid stream or said alpha-calcium sulphate hemihydrate slurry; and
combining said at least one fluid stream with further gypsum, further water and further habit modifier to form a further gypsum slurry,
wherein the process further comprises varying the amount of further habit modifier depending on a measured value of the first control parameter.

2. The process of claim 1, wherein the step of measuring said first control parameter comprises continuously measuring said first control parameter.

3. The process of any one preceding claim, wherein said first control parameter is the pH of said at least one fluid stream or said alpha-calcium sulphate hemihydrate slurry.

4. The process of claim 1 or claim 2, wherein said first control parameter is the volumetric flow rate of said at least one fluid stream or said alpha-calcium sulphate hemihydrate slurry.

5. The process of any one preceding claim, wherein said process comprises the further step of measuring a second control parameter of said at least one fluid stream or said alpha-calcium sulphate hemihydrate slurry.

6. The process of claim 5, wherein the step of measuring said second control parameter comprises enzymatic dosing.

7. The process of claim 5 or claim 6, wherein the process comprises calibrating a measured value of said first control parameter with a measured value of said second control parameter.

8. The process of claim 5, claim 6 or claim 7, wherein the process comprises measuring said first control parameter more frequently than measuring said second control parameter.

9. The process of any one of claims 5 to 8, wherein the step of measuring said second control parameter comprises taking a sample of said at least one fluid stream or said alpha-calcium sulphate hemihydrate slurry and measuring said second control parameter offline.

10. The process of any one of claims 5 to 9, wherein the measurement of said second control parameter is slower than the measurement of said first control parameter.

11. The process of any one of claims 5 to 9, wherein the measurement of said second control parameter is more accurate than the measurement of said first control parameter.

12. The process of any one preceding claim, wherein said habit modifier comprises succinic acid.

13. The process of any one preceding claim, wherein said alpha-calcium sulphate hemihydrate slurry comprises particles having a length to width ratio of between 0.8:1 and 1.2:1 inclusive .

14. An apparatus for performing the process of any one preceding claim, the apparatus comprising:
a mixing zone for mixing habit modifier, water and gypsum particles;
a calciner comprising or located downstream of and in fluid communication with said mixing zone;
a filter located downstream of and in fluid communication with said calciner; and
a fluid pathway for carrying at least one fluid stream from said filter and introducing said at least one fluid stream into said mixing zone; and
at least one measurement device configured to measure a first control parameter of said at least one fluid stream or said alpha-calcium sulphate hemihydrate slurry, wherein the apparatus further comprises control means for varying the amount of habit modifier added to said mixing zone depending on the measured value of the first control parameter.
